# EUROPÄISCHE PATENTSCHRIFT

(11) **EP 3 130 212 B1**
(45) Veröffentlichungstag und Bekanntmachung des Hinweises auf die Patenterteilung: **09.10.2019**
(21) Anmeldenummer: 16001719.0
(22) Anmeldetag: 03.08.2016
(51) Int. Cl.: A01D 34/416

(54) **MÄHKOPF FÜR EINEN FREISCHNEIDER**
MOWER HEAD FOR A STRING MOWER
TÊTE FAUCHEUSE POUR DEBROUSSAILLEUSE

(30) Priorität: 12.08.2015 DE 102015010579
(43) Veröffentlichungstag der Anmeldung: 15.02.2017
(73) Patentinhaber: Andreas Stihl AG & Co. KG, 71336 Waiblingen (DE)
(72) Erfinder: Rethaber, Achim, D-70372 Stuttgart (DE)
(74) Vertreter: Reinhardt, Annette

(56) Entgegenhaltungen:
- EP-A1- 2 692 221
- DE-A1-102005 031 778
- US-A- 4 756 146
- US-A1- 2008 010 836

## Beschreibung

Die Erfindung betrifft einen Mähkopf für einen Freischneider der im Oberbegriff des Anspruchs 1 angegebenen Gattung.

Freischneider oder Motorsensen zum Mähen von Gras oder dergleichen sind allgemein bekannt. Derartige Freischneider besitzen einen Mähkopf, der im Betrieb rotierend angetrieben ist und der einen Schneidfaden trägt, der sich im Betrieb aufgrund der auftretenden Fliehkräfte etwa radial zur Drehachse des Mähkopfs ausrichtet. Der Mähfaden kann auf einer Vorratsspule im Mähkopf aufgewickelt sein und bei Abnutzung von der Spule abgewickelt werden, bis das erforderliche Nennmaß des Mähfadens aus dem Mähkopf ragt. Alternativ sind Mähköpfe bekannt, an denen Schneidfäden vorbestimmter Länge mit einem radial inneren Halteende am Mähkopf fixiert werden. Bei Abnutzung des Schnittbereichs des Mähfadens wird der Mähfaden ausgewechselt.

Aus der DE 10 2005 031 778 A1 ist ein Mähkopf für einen Freischneider bekannt, bei dem zur Befestigung des Halteendes des Mähfadens ein U-förmiger Aufnahmekanal am Mähkopf vorgesehen ist. Der Aufnahmekanal weist an dem zwischen den beiden Schenkeln des U liegenden Bereich einen Klemmabschnitt auf, dessen Querschnitt eine sich verjüngende Keilform besitzt. Bei Zug auf den Mähfaden, beispielsweise aufgrund der im Betrieb wirkenden Fliehkräfte, wird der Schneidfaden in den Klemmabschnitt des Aufnahmekanals hineingezogen und dadurch selbsttätig geklemmt.

Aus der US 4 756 146 A ist ein Mähkopf eines Freischneiders bekannt, bei dem die Befestigung der Schneidfäden mittels bogenförmiger Kanäle erfolgt. Für die Befestigung eines Schneidfadens sind zwei bogenförmige Schneidkanäle vorgesehen.

Aus der EP 2 692 221 A1 ist ein Schneidkopf mit einer Schneidfadenbefestigung bekannt.

In der US 2008/010836 A1 ist ein Schneidkopf eines Freischneiders gezeigt, welcher neben den Befestigungen von Schneidfäden auch Befestigungen von Schneidmessern aufweist.

Der Erfindung liegt die Aufgabe zugrunde, einen Mähkopf für einen Freischneider zu schaffen, bei dem eine verbesserte Fixierung des Mähfadens erreicht wird.

Diese Aufgabe wird durch einen Mähkopf für einen Freischneider mit den Merkmalen des Anspruchs 1 gelöst.

Es ist eine Befestigungseinrichtung für den Mähfaden mit einer Fadenführung vorgesehen, wobei die Fadenführung einen Klemmabschnitt und einen an den Klemmabschnitt anschließenden Umlenkbereich aufweist, der eine Umlenkkante besitzt. Die Umlenkkante ist ein Teil der Fadenführung, so dass über die Umlenkkante ein durch den Fadenkanal geführter Mähfaden zu führen ist. Die Umlenkkante ist so zur Längsrichtung des Klemmabschnitts geneigt, dass die Umlenkkante bei einer Zugkraft auf einen durch die Befestigungseinrichtung geführten Mähfaden stets eine Kraftkomponente auf den Mähfaden in Richtung auf die schmale Längsseite des Klemmabschnitts erzeugt. Durch die Schrägstellung der Umlenkkante kann auf einfache Weise stets eine Kraftkomponente auf den Mähfaden in Richtung auf die schmale Längsseite des Klemmabschnitts erzeugt werden, so dass der Mähfaden zuverlässig in Richtung auf die schmale Längsseite des Klemmabschnitts gedrückt und damit in den Klemmkeil hineingezogen wird. Dadurch wird eine Selbsthemmung der Befestigungseinrichtung erreicht. Eine Zugkraft auf den Mähfaden führt zu einer Klemmkraft auf den Mähfaden aufgrund der Kraftkomponente in Richtung auf die schmale Längsseite des Klemmabschnitts. Es hat sich gezeigt, dass durch eine derart geneigte Umlenkkante die Auszugskraft, also die maximal vom Mähfaden aufnehmbare Kraft, bevor sich der Mähfaden aus der Befestigungseinrichtung löst, erheblich erhöht werden kann. Die Auszugskraft wird dabei insbesondere auch dann erhöht, wenn das vom Schneidkopf nach außen ragende freie Ende des Mähfadens nicht radial zur Drehachse des Mähkopfes ausgerichtet ist. Die Umlenkkante kann konstruktiv einfach ausgeführt werden, so dass eine einfache Befestigungseinrichtung mit sehr hoher Auszugskraft realisierbar ist. Der Mähkopf ist vorteilhaft sowohl für Mähfäden mit vergleichsweise großem Durchmesser als auch für Mähfäden mit vergleichsweise kleinem Durchmesser geeignet. Dadurch muss der Fadenkanal vergleichsweise breit sein, wodurch eine Schrägstellung eines Mähfadens mit kleinem Durchmesser in dem Fadenkanal möglich ist. Bei bekannten Mähköpfen kann der Mähfaden aufgrund seiner Schrägstellung nicht mehr zuverlässig geklemmt werden, sondern aufgrund der am Mähfaden wirkenden Zugkräfte aus dem Fadenkanal gezogen werden. Die Neigung der Umlenkkante bewirkt eine Kraftkomponente in Richtung auf die schmale Längsseite des Klemmabschnitts und damit eine zuverlässige Klemmung des Mähfadens in dem Klemmabschnitt und vermeidet, dass ein Mähfaden mit kleinem Durchmesser aufgrund der am Mähfaden wirkenden Zugkräfte bei Schrägstellung des Mähfadens aus der Fadenführung gezogen werden kann.

Die Fadenführung bezeichnet alle Bereiche, an denen der Mähfaden an der Befestigungseinrichtung geführt ist. Die Fadenführung erstreckt sich von einem Fadeneintritt in den Mähkopf bis zu einem Fadenaustritt aus dem Mähkopf. Die Fadenführung muss dabei nicht als geschlossener Kanal ausgebildet sein. Bevorzugt wird die Fadenführung mindestens teilweise nur durch Wände oder Kanten gebildet, die nur an einer Längsseite des Mähfadens vorgesehen sind, insbesondere im Umlenkbereich.

Die Zugkraft ist insbesondere die auf den Mähfaden wirkende Fliehkraft. Die Zugkraft wirkt vorteilhaft an dem aus dem Mähkopf ragenden Ende des Mähfadens. Die Zugkraft wirkt insbesondere bezogen auf die Drehachse des Mähkopfs radial nach außen.

Die Längsrichtung des Klemmabschnitts schließt mit der Umlenkkante in einer Schnittebene, die parallel zur Drehachse liegt und die Umlenkkante enthält, vorteilhaft einen Winkel von 10° bis 80° ein. Der Winkel ist dabei in Richtung zum Fadenkanal gemessen und öffnet in Richtung auf die schmale Längsseite des Klemmabschnitts. Vorteilhaft beträgt der Winkel von 20° bis 70°, insbesondere von 30° bis 60°. Der Winkel ist dabei vorteilhaft so groß, dass keine Selbsthemmung an der Umlenkkante beim Abgleiten des Mähfadens an der Umlenkkante stattfindet. In einer besonders vorteilhaften Anordnung verläuft die Längsrichtung des Klemmabschnitts parallel zur Drehachse des Mähkopfs. Ein ansprechendes Äußeres, ein geringer Luftwiderstand und eine kompakte Gestalt des Mähkopfs werden erreicht, wenn der Mähkopf in dem den Fadenkanal aufweisenden Abschnitt mindestens teilweise eine konische Außenkontur aufweist und wenn der Winkel, den die Umlenckante mit der Drehachse einschließt, etwa dem Konuswinkel entspricht. Der Konuswinkel ist dabei der Winkel zwischen der Drehachse und der Mantelfläche des Konus, also der Außenseite des Mähkopfes im Bereich der konischen Außenkontur. Dadurch kann die Umlenkkante mit geringem Versatz zur Außenwand in dem konischen Abschnitt angeordnet werden, so dass der Mähfaden unabhängig von seiner Lage an der Umlenkkante etwa bündig mit der Außenkontur des Mähkopfs abschließt. Zur Erhöhung der Klemmwirkung kann es jedoch vorteilhaft sein, dass der Winkel, den die Umlenkkante mit der Drehachse einschließt, größer als der Konuswinkel ist. Auch ein Konuswinkel, der größer als der Winkel, den die Umlenkkante mit der Drehachse einschließt, kann vorteilhaft sein, beispielsweise, um ein ansprechendes Äußeres des Mähkopfes zu erreichen.

Vorteilhaft ist die schmale Längsseite des Klemmabschnitts des mindestens einen Fadenkanals radial außen angeordnet und die breite Längsseite radial innen. Dadurch wirkt die am freien Ende des Mähfadens wirkende Fliehkraft in Richtung auf die schmale Längsseite, ohne dass eine weitere Umlenkung des Mähfadens erforderlich ist, um die Klemmkraft bereitzustellen. Vorteilhaft besitzt der Mähkopf eine Stirnseite, die den Mähkopf in Richtung der Drehachse begrenzt. Im Fadenkanal ist vorteilhaft eine Umlenkkontur ausgebildet, die einen an der Befestigungseinrichtung fixierten Mähfaden von der Umfangswand des Mähkopfs zur Stirnseite bzw. von der Stirnseite zur Umfangswand umlenkt. Dadurch kann eine vorteilhafte Anordnung der Befestigungseinrichtung an dem Mähkopf erreicht werden.

Vorteilhaft ist der Fadenkanal ein erster Fadenkanal, und der Mähkopf besitzt einen zweiten Fadenkanal, wobei die Umlenkkante zwischen den Fadenkanälen angeordnet ist. Dabei besitzt jeder Fadenkanal einen Klemmabschnitt. Dadurch, dass zwei Fadenkanäle mit je einem Klemmabschnitt vorgesehen sind, ergibt sich eine verbesserte Fixierung des Mähfadens. Über die Neigung der Umlenkkante wird der Mähfaden in beiden Fadenkanälen in Richtung auf die schmale Längsseite gedrückt. Die Biegesteifigkeit des Mähfadens ist dabei vorteilhaft so groß, dass nur an einem der Enden des Mähfadens eine Zugkraft auf den Mähfaden ausgeübt werden muss, um den Mähfaden in beiden Fadenkanälen in Richtung auf die schmale Längsseite zu drücken. Die Zugkraft auf den Mähfaden wird insbesondere von der am schneidenden Ende des Mähfadens wirkenden Fliehkraft aufgebracht.

Ein kompakter Aufbau ergibt sich, wenn die Längsrichtungen der Klemmabschnitte der Fadenkanäle etwa parallel zueinander verlaufen und die Fadenkanäle jeweils eine dem anderen Fadenkanal zugewandte Seitenwand besitzen, wobei die Seitenwände an einem gemeinsamen Trennsteg ausgebildet sind, an dessen Stirnseite die Umlenkkante ausgebildet ist. Die Stirnseite ist dabei die Seite des Trennstegs, die zwischen den die Klemmabschnitte begrenzenden Seitenwänden liegt. Die Stirnseite liegt vorteilhaft an einer Außenseite des Mähkopfs. Die Fadenkanäle verlaufen dabei vorteilhaft im Rahmen der Fertigungsgenauigkeit parallel zueinander. Dabei können beispielsweise bei der Herstellung des Mähkopfs als Kunststoffspritzgussteil Ausformschrägen vorgesehen sein, so dass die Seitenwände einen geringen Winkel einschließen.

Vorteilhaft beginnt die Fadenführung an einer Eintrittsöffnung, die in einer Eintrittsrichtung liegt, und endet an einer Austrittsöffnung, die in einer Austrittsrichtung liegt. Die Eintrittsöffnung ist dabei die Öffnung, durch die das freie Schneidende des Mähfadens ragt. Es kann auch vorgesehen sein, dass sowohl an der Eintrittsöffnung als auch an der Austrittsöffnung ein schneidendes Ende des Mähfadens austritt. Über die Eintrittsöffnung kann der Mähfaden bei der Montage des Mähfadens an dem Mähkopf in die Fadenführung eingeschoben werden. Auch eine Montage in entgegengesetzter Richtung oder eine Montage, bei der der Mähfaden ausgehend von zwischen Eintrittsöffnung und Austrittsöffnung liegenden Öffnungen, also von einem mittleren Bereich des Fadenkanals aus, in den Fadenkanal eingeschoben wird, kann jedoch vorteilhaft sein. Vorteilhaft liegt eine durch die Eintrittsöffnung verlaufende, in Eintrittsrichtung liegende Eintrittsgerade zu einer durch die Austrittsöffnung verlaufenden, in Austrittsrichtung liegenden Austrittsgeraden windschief. Die Eintrittsgerade und die Austrittsgerade schneiden sich demnach nicht, sondern besitzen einen Abstand zueinander. In einer Ebene, die die Eintrittsgerade enthält und die von dem durch die Austrittsrichtung gebildeten Richtungsvektor aufgespannt wird, schließt die Eintrittsrichtung mit der Austrittsrichtung, demnach einen Winkel ein, der größer als 0° ist. Vorteilhaft ist der Winkel zwischen den Richtungsvektoren von Eintrittsrichtung und Austrittsrichtung größer als 45°. Besonders bevorzugt beträgt der Winkel zwischen Eintrittsrichtung und Austrittsrichtung etwa 90°. Vorteilhaft weist der an die Austrittsöffnung anschließende Fadenkanal keine Umlenkkontur auf und der an die Eintrittsöffnung anschließende Fadenkanal besitzt eine Umlenkkontur für den Mähfaden. Vorteilhaft wird der Mähfaden in dem an die Austrittsöffnung angrenzenden Fadenkanal nicht zur Umfangswand umgelenkt wird. Dadurch steht an der Eintrittsöffnung mehr Platz für Rundungen zur Verfügung, so dass das Risiko eines Bruchs des Mähfadens im Bereich der Eintrittsöffnung verringert ist. Die Eintrittsöffnung ist dabei vorteilhaft die Öffnung, aus der das schneidende Ende des Mähfadens ragt. Vorteilhaft ist die Eintrittsöffnung an einem ersten Fadenkanal und die Austrittsöffnung an einem zweiten Fadenkanal ausgebildet.

Vorteilhaft schließt der Fadenkanal an die Eintrittsöffnung an. Am anderen Ende des Fadenkanals schließt der Umlenkbereich an. Besonders bevorzugt umfasst die Fadenführung die Eintrittsöffnung, einen ersten Fadenkanal, den Umlenkbereich, einen zweiten Fadenkanal und die Austrittsöffnung, die in dieser Reihenfolge aneinander anschließen.

Ein einfacher Aufbau des Mähkopfs wird erreicht, wenn der Mähkopf ein Gehäuse umfasst, das aus mindestens zwei Gehäuseteilen gebildet ist, wobei die beiden Gehäuseteile die Fadenführung begrenzen und durch mindestens einen Niet miteinander verbunden sind. Dadurch, dass beide Gehäuseteile die Fadenführung begrenzen, ist eine einfache Herstellung der Fadenführung, insbesondere bei der Herstellung der Gehäuseteile im Kunststoffspritzguss, möglich. Bevorzugt bildet der mindestens eine Niet eine Messeraufnahme, an der ein Messer eingehängt werden kann. Für die Messeraufnahme werden dadurch keine zusätzlichen Bauteile benötigt. Der Mähkopf kann alternativ mit mindestens einem an der Messeraufnahme eingehängten Messer oder mit mindestens einem an der Befestigungseinrichtung fixierten Mähfaden betrieben werden. Dadurch ist der Mähkopf vielseitig einsetzbar.

Vorteilhaft besitzt der Mähkopf benachbart zu dem Niet eine bogenförmige Vertiefung in der Umfangswand, wobei das Zentrum der Vertiefung radial zwischen dem Niet und der Drehachse liegt und vorlaufend zu einer Verbindungsebene, die die Drehachse und eine Längsachse des Niets enthält, angeordnet ist. Der Abstand des Zentrums der Vertiefung zur Drehachse ist demnach kleiner als der Abstand der Mittelachse des Niets zu der Drehachse. Der Durchmesser der bogenförmigen Vertiefung entspricht dabei mindestens der Breite des Messers, so dass das Messer in die bogenförmige Vertiefung eintreten kann. Dadurch, dass die bogenförmige Vertiefung in der Drehrichtung des Mähkopfs vorlaufend zu der Verbindungsebene von Drehachse und Längsachse des Niets angeordnet ist, kann ein Messer nur von dem Niet abgenommen werden, wenn sich das Messer in einer vorgegebenen Winkellage befindet und eine Kraft in Richtung der Messerlängsachse auf das Messer ausgeübt wird, so dass sich das Messer in die bogenförmige Vertiefung verschiebt. In anderen Winkellagen wird ein Aushängen des Messers vorteilhaft durch eine am Mähkopf ausgebildete Begrenzungskontur vermieden. Zusätzlich zu der bogenförmigen Vertiefung kann nachlaufend zum Messer eine Aussparung vorgesehen sein, in die der Messerkörper verschwenken kann, wenn er im Betrieb auf ein Hindernis auftrifft. Dadurch können Beschädigungen des Messers vermieden werden und der auf das Hindernis ausgeübte Impuls wird verringert.

Für einen Mähkopf für einen Freischneider mit mindestens einem Mähfaden ist vorgesehen, dass die Fadenführung einen an den Klemmabschnitt anschließenden Umlenkbereich aufweist, der eine Umlenkkante besitzt, über die der Mähfaden geführt ist. Die Umlenkkante ist so zur Längsrichtung des Klemmabschnitts geneigt, dass die Umlenkkante bei einer Zugkraft auf den Mähfaden eine Kraftkomponente auf den Mähfaden in Richtung auf die schmale Längsseite des Klemmabschnitts erzeugt.

Ein Ausführungsbeispiel der Erfindung wird im Folgenden anhand der Zeichnung erläutert. Es zeigen:
- Fig. 1: eine schematische Darstellung eines Bedieners mit einem Freischneider,
- Fig. 2 und Fig. 3: perspektivische Darstellungen des Mähkopfs des Freischneiders aus Fig. 1,
- Fig. 4: eine vergrößerte Darstellung des Bereichs der Befestigungseinrichtung aus Fig. 3,
- Fig. 5: eine Ansicht auf den Mähkopf von unten,
- Fig. 6: eine ausschnittsweise vergrößerte Darstellung des Bereichs der Befestigungseinrichtung aus Fig. 5,
- Fig. 7: eine ausschnittsweise Darstellung eines Schnitts durch den Mähkopf entlang der Linie VII-VII in Fig. 5,
- Fig. 8: eine Ansicht von oben auf das untere Gehäuseteil des Mähkopfs,
- Fig. 9: eine ausschnittsweise vergrößerte Darstellung des Bereichs der Fadenkanäle aus Fig. 8,
- Fig. 10: eine Seitenansicht des Mähkopfs,
- Fig. 11: einen Schnitt entlang der Linie XI-XI in Fig. 10,
- Fig. 12: einen Schnitt entlang der Linie XII-XII in Fig. 10,
- Fig. 13: eine ausschnittsweise Darstellung eines Schnitts durch ein weiteres Ausführungsbeispiel eines Mähkopfs.

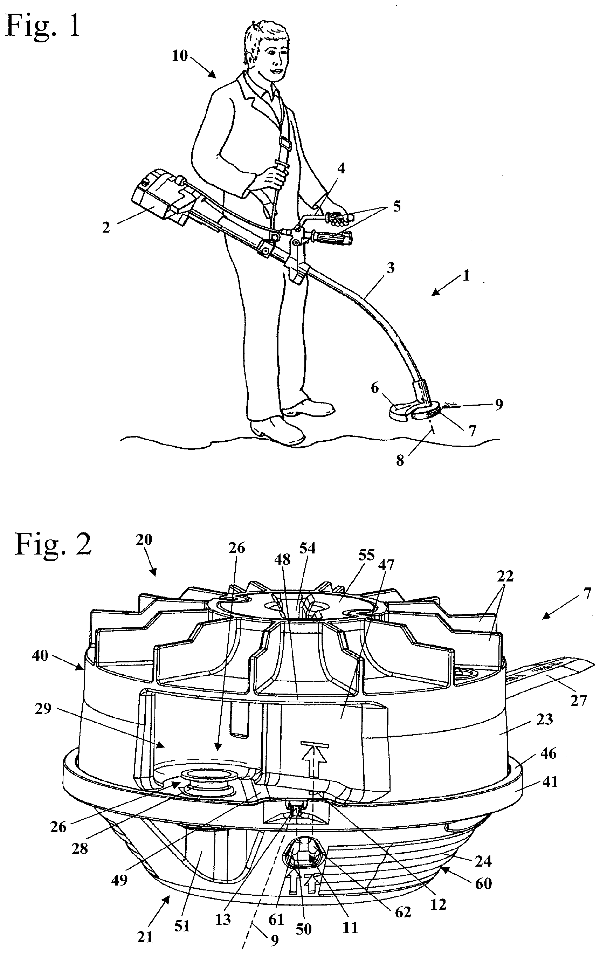

Fig. 1 zeigt schematisch einen Freischneider 1, der von einem Bediener 10 getragen wird. Der Freischneider 1 besitzt ein Gehäuse 2, das über ein Führungsrohr 3 mit einem Mähkopf 7 verbunden ist. Der Mähkopf 7 ist gegenüber dem Führungsrohr 3 drehbar gelagert. Der Mähkopf 7 ist im Ausführungsbeispiel teilweise von einem Schutz 6 abgedeckt. Der Mähkopf 7 rotiert im Betrieb um eine Drehachse 8. In Fig. 1 ist ein aus dem Mähkopf 7 ragender Mähfaden 9 schematisch eingezeichnet. Am Führungsrohr 3 ist im Ausführungsbeispiel ein Griffrohr 4 festgelegt, an dem zwei Handgriffe 5 zum Führen des Freischneiders 1 im Betrieb angeordnet sind.

Im Gehäuse 2 kann ein Antriebsmotor, beispielsweise ein Verbrennungsmotor, angeordnet sein, der über eine im Führungsrohr 3 drehbar gelagerte Welle den Mähkopf 7 rotierend antreibt. Es kann jedoch auch vorgesehen sein, dass im Gehäuse 2 Energiespeicher, beispielsweise Batterien oder Akkus, angeordnet sind, die über im Führungsrohr 3 geführte Anschlusskabel mit einem benachbart zum Mähkopf 7 am Führungsrohr 3 fixierten Elektromotor verbunden sind. Ist der Freischneider 1 über ein Anschlusskabel mit Energie versorgt, kann das Gehäuse 2 auch entfallen.

Wie Fig. 2 zeigt, besitzt der Mähkopf 7 ein Gehäuse 40, das im Ausführungsbeispiel ein erstes Gehäuseteil 23 und ein zweites Gehäuseteil 24 umfasst. Im Ausführungsbeispiel sind die Gehäuseteile 23 und 24 als Halbschalen ausgebildet. Das Gehäuse 40 besitzt eine im Betrieb dem Boden abgewandt liegende Oberseite 20, die im Ausführungsbeispiel am ersten Gehäuseteil 23 ausgebildet ist und eine Unterseite 21, die im Betrieb dem Boden zugewandt liegt und die im Ausführungsbeispiel vom zweiten Gehäuseteil 24 gebildet ist. Auch eine andere Gestaltung des Gehäuses 40, beispielsweise eine einteilige Ausbildung, kann jedoch vorteilhaft sein. An der Oberseite 20 ist eine Vielzahl von Lüfterflügeln 22 angeordnet. Die Lüfterflügel 22 dienen vorteilhaft zur Erzeugung eines Kühlluftstroms. Dies ist insbesondere vorteilhaft, wenn der Mähkopf 7 benachbart zu einem Elektromotor angeordnet ist. Das Gehäuse 40 besitzt eine Umfangswand 41, die teilweise vom oberen Gehäuseteil 23 und teilweise vom unteren Gehäuseteil 24 gebildet wird und die das Gehäuse 40 in radialer Richtung zur Drehachse 8 (Fig. 1) begrenzt. Wie Fig. 2 auch zeigt, besitzt das zweite Gehäuseteil 24 einen Rand 46, der ebenfalls einen Abschnitt der Umfangswand 41 bildet und der das erste Gehäuseteil 23 übergreift. Die Umfangswand 41 besitzt im ersten, oberen Gehäuseteil 23 eine Aussparung 47, an der die Umfangswand 41 in Richtung zur Drehachse 8, also nach innen, versetzt ist. Die Aussparung 47 umfasst eine bogenförmige Vertiefung 29, in deren Bereich ein Niet 28 angeordnet ist. Der Niet 28 verbindet die beiden Gehäuseteile 23 und 24 fest miteinander und bildet gleichzeitig eine Messeraufnahme 26. Wie Fig. 2 zeigt, besitzt das zweite Gehäuseteil 24 im Bereich des Niets 28 eine Vertiefung 51, in der der Niet 28 angeordnet ist.

Der Mähkopf 7 besitzt zwei Messeraufnahmen 26. In Fig. 2 ist an der in der Darstellung nicht sichtbaren Messeraufnahme 26 ein Messer 27 angeordnet. Alternativ können am Mähkopf 7 vorgelängte Stücke eines Mähfadens 9 fixiert werden. Hierzu besitzt der Mähkopf 7 mindestens eine Befestigungseinrichtung 11. Im Ausführungsbeispiel sind zwei einander gegenüberliegend angeordnete Befestigungseinrichtungen 11 vorgesehen, von denen in Fig. 2 eine gezeigt ist. Auch eine andere Anzahl von Befestigungseinrichtungen 11 kann jedoch vorteilhaft sein.

In Fig. 2 ist in der Befestigungseinrichtung 11 schematisch ein Mähfaden 9 mit gestrichelter Linie eingezeichnet. Der Mähfaden 9 tritt an einer Eintrittsöffnung 13 in die Befestigungseinrichtung 11 ein. Die Eintrittsöffnung 13 ist Teil einer Fadenführung 50, durch die der Mähfaden 9 geführt ist, bis er die Befestigungseinrichtung 11 an einer Austrittsöffnung 12 verlässt. Der Mähfaden 9 ist in einem Bereich zwischen seinen Enden an der Befestigungseinrichtung 11 fixiert. Die Eintrittsöffnung 13 ist dabei die Öffnung, aus der ein schneidendes Mähfadenende herausragt. Im Ausführungsbeispiel tritt durch die Eintrittsöffnung 13 das schneidende Fadenende aus, und das aus der Austrittsöffnung 12 austretende Fadenende endet am Mähkopf. Es kann jedoch auch vorgesehen sein, dass durch die Austrittsöffnung 12 und durch die Eintrittsöffnung 13 schneidende Fadenenden austreten. Ein an dem Mähkopf 7 zu fixierender Mähfaden 9 wird vorteilhaft durch die Eintrittsöffnung 13 in die Fadenführung 50 eingeschoben. Auch eine andere Montage des Mähfadens 9 kann jedoch vorteilhaft sein, beispielsweise ausgehend von der Austrittsöffnung 12. Im Ausführungsbeispiel ist die Eintrittsöffnung 13 an der Umfangswand 41 ausgebildet. Die Austrittsöffnung 12 ist an einer Wand 49 ausgebildet, die die Aussparung 47 in Richtung auf das zweite Gehäuseteil 24 begrenzt. Die Aussparung 47 ist zu der dem zweiten Gehäuseteil 24 abgewandten Seite von einer Wand 48 begrenzt, an deren Oberseite die Lüfterflügel 22 angeordnet sind. Auch eine Anordnung der Austrittsöffnung 12 an einer anderen Stelle des Gehäuses 40, beispielsweise an der Oberseite 20, kann jedoch vorteilhaft sein.

Wie Fig. 2 zeigt, ist der Mähfaden 9 in der Fadenführung 50 von der Eintrittsöffnung 13 zunächst in Richtung zur Unterseite 21 umgelenkt und tritt an einem konischen Abschnitt 60 der Umfangswand 41, der am zweiten Gehäuseteil 24 ausgebildet ist, durch eine Öffnung 61 aus dem Gehäuse 40 aus und durch eine benachbart zur Öffnung 61 angeordnete Öffnung 62 wieder in das Gehäuse 40 ein. Bei der Montage des Mähfadens 9 an dem Mähkopf 7 kann der Bediener 10 den Mähfaden durch die Öffnung 61 ziehen, bis die gewünschte Länge des Schneidabschnitts des Mähfadens 9 erreicht ist, und anschließend das andere Fadenende durch die Öffnung 62 führen. Der Mähfaden 9 ist von der Öffnung 62 in Richtung auf die Oberseite 20 geführt, bis er an der Austrittsöffnung 12 austritt. Auch eine Montage ausgehend von den Öffnungen 61 und 62 oder ausgehend von der Austrittsöffnung 12 kann vorteilhaft sein. Im Ausführungsbeispiel verläuft die Fadenführung 50 von der Öffnung 62 bis zur Austrittsöffnung 12 geradlinig. Wie Fig. 2 auch zeigt, besitzt das Gehäuseteil 24 einen Stutzen 55, an dem eine Befestigungsöffnung 54 zur Fixierung des Mähkopfs 7 an einer Antriebswelle ausgebildet ist. Der Stutzen 55 ist am zweiten, unteren Gehäuseteil 24 ausgebildet und ragt durch das erste, obere Gehäuseteil 23.

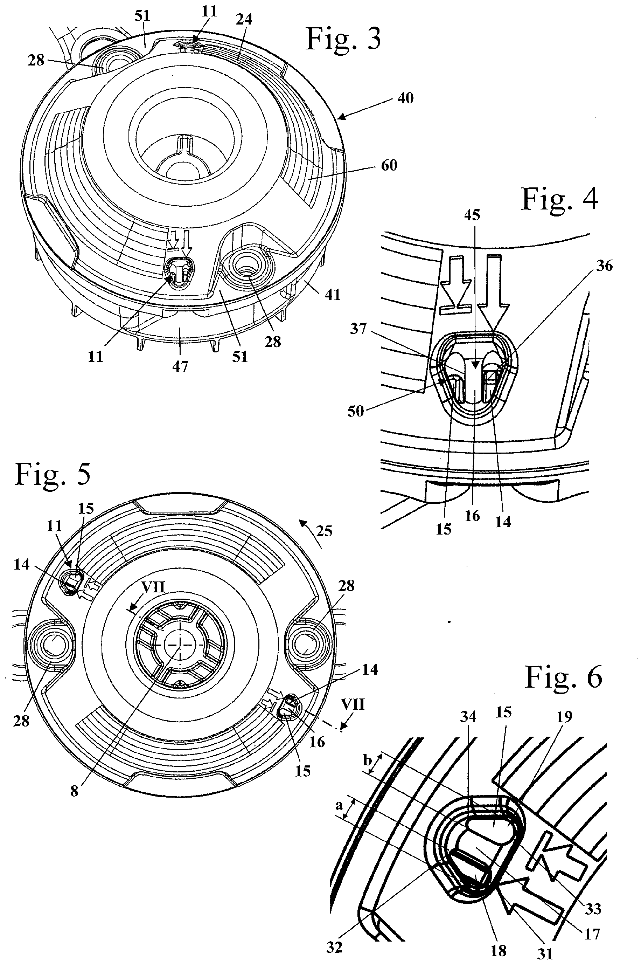

Fig. 3 zeigt in einer perspektivischen Darstellung das Gehäuse 40 mit den beiden einander gegenüberliegend angeordneten Befestigungseinrichtungen 11 und den beiden einander gegenüberliegend angeordneten Nieten 28 für die Messeraufnahmen 26. Wie Fig. 3 zeigt, sind jeweils eine Befestigungseinrichtung 11 und ein Niet 28 in Umfangsrichtung benachbart zueinander und an einer gemeinsamen Aussparung 47 der Umfangswand 41 angeordnet.

Wie Fig. 4 zeigt, umfasst die Fadenführung 50 einen ersten Fadenkanal 14 und einen zweiten Fadenkanal 15, zwischen denen ein Trennsteg 16 ausgebildet ist. Im Ausführungsbeispiel verlaufen die Fadenkanäle 14 und 15 näherungsweise parallel zueinander. Zwischen den Fadenkanälen 14 und 15 ist ein Umlenkbereich 45 der Fadenführung 50 angeordnet, der jeweils an einen Fadenkanal 14 und 15 anschließt. Am Trennsteg 16 ist eine Seitenwand 36 des ersten Fadenkanals 14 und eine Seitenwand 37 des zweiten Fadenkanals 15 ausgebildet. Die Seitenwände 36 und 37 verlaufen etwa parallel zueinander.

In Fig. 5 ist die Drehrichtung 25 des Mähkopfs 7 im Betrieb eingezeichnet. Wie Fig. 5 zeigt, ist jeweils ein Niet 28 vorlaufend zu einer Befestigungseinrichtung 11 für einen Mähfaden 9 angeordnet.

Fig. 6 zeigt die Gestaltung der Fadenkanäle 14 und 15 im Einzelnen. Der besseren Übersicht halber ist der erste Fadenkanal 14 nur in Fig. 5 bezeichnet. Der erste Fadenkanal 14 umfasst einen Klemmabschnitt 18, der eine im Querschnitt keilförmige Gestalt besitzt. Der zweite Fadenkanal 15 umfasst einen Klemmabschnitt 19, der ebenfalls eine keilförmige Gestalt aufweist. Die Stirnseite des Trennstegs 16, also die zwischen den Seitenwänden 36 und 37 angeordnete, die Außenseite des Mähkopfes 7 bildende Fläche (Fig. 4), bildet eine Umlenkkante 17 für den Mähfaden 9. Der Klemmabschnitt 18 besitzt eine schmale Längsseite 32, die im Ausführungsbeispiel radial außen angeordnet ist, sowie eine breite Längsseite 31, die im Ausführungsbeispiel bezogen auf die Drehachse 8 radial innen angeordnet ist. Auch der Klemmabschnitt 19 besitzt eine breite Längsseite 33, die radial innen angeordnet ist, sowie eine schmale Längsseite 34, die radial außen angeordnet ist. Der Klemmabschnitt 18 besitzt eine lichte Weite a, die größer als der maximale Durchmesser eines am Mähkopf 7 anzuordnenden Mähfadens 9 ist. Der Klemmabschnitt 19 besitzt eine lichte Weite b. Die lichte Weite a und die lichte Weite b sind jeweils in Umfangsrichtung zur Drehachse 8 und senkrecht zu den Seitenwänden 36 und 37 (Fig. 4) gemessen. Wie Fig. 6 zeigt, nimmt die lichte Weite in den Klemmabschnitten 18 und 19 von den breiten Längsseiten 31, 33 zu den schmalen Längsseiten 32, 34 kontinuierlich ab, wodurch sich die Keilform der Klemmabschnitte 18 und 19 ergibt. An den schmalen Längsseiten 32, 34 ist die lichte Weite der Klemmabschnitte 18, 19 kleiner als der minimale Durchmesser eines an der Befestigungseinrichtung 11 zu fixierenden Mähfadens 9, so dass der Mähfaden 9 sicher geklemmt werden kann. An den Längsseiten 31, 32, 33 und 34 sind die Klemmabschnitte 18 und 19 im Ausführungsbeispiel gerundet ausgeführt.

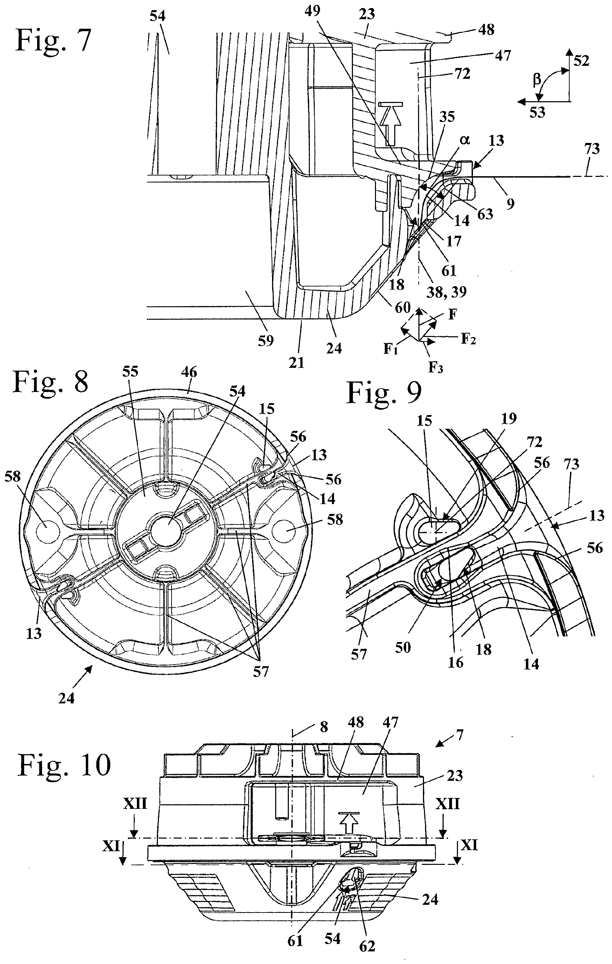

Fig. 7 zeigt die Gestaltung der Fadenführung 50 im Einzelnen. Durch die Eintrittsöffnung 13 tritt der in Fig. 7 schematisch gezeigte Mähfaden 9 in einer Eintrittsrichtung 53 in den ersten Fadenkanal 14 ein. Der erste Fadenkanal 14 ist zwischen den Gehäuseteilen 23 und 24 gebildet und von beiden Gehäuseteilen 23, 24 begrenzt. Am ersten Gehäuseteil 23 ist eine Umlenkkontur 35 ausgebildet, die den Mähfaden 9 im Ausführungsbeispiel beim Einschieben des Mähfadens 9 in die Eintrittsöffnung 13 gegenüber der Eintrittsrichtung 53 in Richtung auf die Unterseite 21 des Mähkopfs 7 umlenkt. Der Mähfaden 9 wird dabei im Ausführungsbeispiel von einer bezogen auf die Drehachse 8 (Fig. 5) im Wesentlichen radialen Ausrichtung an der Eintrittsöffnung 13 zu einer Ausrichtung in Richtung auf die Unterseite 21 des Mähkopfes 7, im Ausführungsbeispiel zu einer axialen Ausrichtung, also einer Ausrichtung parallel zur Drehachse 8, an der Öffnung 61 umgelenkt. Gegenüberliegend zur Umlenkkontur 35 ist am Gehäuseteil 24 im Fadenkanal 14 eine Umlenkkontur 63 ausgebildet, die eine auf den Mähfaden 9 ausgeübte Zugkraft teilweise aufnimmt und den Mähfaden 9 in Richtung auf die Unterseite 21 des Mähkopfs 7, im Ausführungsbeispiel bis zu einer Ausrichtung parallel zur Drehachse 8, umlenkt. An dem konischen Abschnitt 60 der Umfangswand 41 tritt der Mähfaden 9 aus dem zweiten Gehäuseteil 24 an der Öffnung 61 aus. Die Öffnung 61 ist auch in Fig. 10 gezeigt. Der Mähfaden 9 ist anschließend durch den Umlenkbereich 45 (Fig. 4) geführt und tritt an der in Fig. 10 gezeigten Öffnung 62 in den zweiten Fadenkanal 15 (Fig. 6) ein. An der Austrittsöffnung 12 (Fig. 2) verlässt der Mähfaden 9 den Fadenkanal 15 in einer Austrittsrichtung 52. Im zweiten Fadenkanal 15 ist der Mähfaden 9, wie in Fig. 7 mit gestrichelter Linie angedeutet, im Ausführungsbeispiel über die gesamte Länge des zweiten Fadenkanals 15 parallel zur Drehachse 8 geführt.

Der Mähkopf 7 besitzt eine Eintrittsgerade 73, die in Eintrittsrichtung 53 liegt und die durch die Eintrittsöffnung 13 verläuft. Ein durch die Eintrittsöffnung 13 geführter Mähfaden 9 verläuft vorteilhaft zumindest im Bereich der Eintrittsöffnung 13 deckungsgleich zur Eintrittsgeraden 73. Der Mähkopf 7 besitzt eine Austrittsgerade 72, die durch die Austrittsöffnung 12 verläuft und in Austrittsrichtung 52 liegt. Ein durch die Austrittsöffnung 12 geführter Mähfaden 9 verläuft vorteilhaft zumindest im Bereich der Austrittsöffnung 12 deckungsgleich zur Austrittsgeraden 72. Die Eintrittsrichtung 53 und die Austrittsrichtung 52 sind dabei Richtungsvektoren. Die Austrittsgerade 72 und die Eintrittsgerade 73 verlaufen windschief zueinander, besitzen also einen Abstand zueinander und schneiden sich nicht. Dies ergibt sich durch den Abstand der Fadenkanäle 14 und 15 in Umfangsrichtung zueinander. Die Eintrittsrichtung 53, mit der der Mähfaden 9 in die Eintrittsöffnung 13 eintritt, und die Austrittsrichtung 52, mit der der Mähfaden 9 aus der Austrittsöffnung 12 austritt, schließen im Ausführungsbeispiel einen Winkel β ein, der etwa 90° beträgt. Der Winkel β ist dabei in Fig. 7 in einer Ebene eingezeichnet, die die Eintrittsöffnung 13 enthält und die durch die Richtungsvektoren von Eintrittsrichtung 53 und Austrittsrichtung 52 aufgespannt wird. Der Winkel β ist vorteilhaft größer als 0°, insbesondere größer als 45°. Dadurch, dass der Mähfaden 9 in die Aussparung 47 austritt, steht benachbart zur Eintrittsöffnung 13 mehr Platz zur Verfügung. Dadurch kann die Austrittsöffnung 13 mit vergleichsweise großen Rundungen 56 ausgeführt werden, die in Fig. 8 und 9 gezeigt sind. Dadurch ist das Risiko eines Fadenbruchs eines schneidenden Fadenendes an der Eintrittsöffnung 13 verringert.

Im konischen Abschnitt 60 ist die Außenwand des Gehäuses 40 zur Achse eines Kegels, die insbesondere der Drehachse 8 (Fig. 5) entspricht, um einen Konuswinkel geneigt, der vorteilhaft einem Winkel α zwischen der Umlenkkante 17 und den Längsrichtungen 38, 39 entspricht. Die Umlenckante 17 und die Außenkontur des konischen Abschnitts 60 verlaufen dadurch parallel zueinander. Die Umlenkkante 17 ist gegenüber der Außenkontur vorteilhaft in das Gehäuse 40 versetzt. Der Versatz ist dabei vorteilhaft mindestens etwa so groß wie der Durchmesser eines an der Befestigungseinrichtung 11 zu fixierenden Mähfadens 9. Dadurch steht der Mähfaden 9 unabhängig von seiner Lage an der Umlenkkante 17 nicht über die Außenkontur des Gehäuses 40 über, wodurch der Luftwiderstand und die Verschmutzungsneigung an der Befestigungseinrichtung 11 verringert werden können.

In Fig. 7 sind die Längsrichtungen 38 und 39 der Klemmabschnitte 18 und 19 eingezeichnet. Die Längsrichtungen 38 und 39 bezeichnen die Richtung, in der der Mähfaden 9 durch die Klemmabschnitte 18 und 19 hindurchgeführt ist. Der Klemmabschnitt 18 erstreckt sich dabei im Ausführungsbeispiel nur in dem an die Öffnung 61 angrenzenden Abschnitt des Fadenkanals 14. Die Umlenkkante 17 verläuft zu den Längsrichtungen 38 und 39 um einen Winkel α geneigt, der in Richtung auf den Fadenkanal 14 gemessen ist und der in Richtung auf die schmale Längsseite 32 (Fig. 6) des Klemmabschnitts 18 öffnet. Eine Zugkraft am freien, radial aus dem Mähkopf 9 ragenden Ende des Mähfadens 9 bewirkt durch die Umlenkung des Mähfadens 9 an der Umlenkkante 17 eine Kraft F, die auf den Trennsteg 16 (Fig. 4) wirkt. Die Zugkraft am freien Ende des Mähfadens 9 ist vorteilhaft die im Betrieb wirkende Fliehkraft. Die Zugkraft am freien Ende des Mähfadens 9 wirkt vorteilhaft bezogen auf die Drehachse 8 radial, also senkrecht zur Drehachse 8 nach außen. Die Zugkraft wirkt dabei vorteilhaft in Längsrichtung des freien Endes des Mähfadens 9. Aufgrund der Schrägstellung der Umlenkkante 17 gegenüber der Längsrichtung 38 wird die Kraft F aufgeteilt in eine Normalkraft F₁, die senkrecht zur Umlenkkante 17 wirkt, sowie eine Abtriebskraft F₂, die tangential zur Umlenkkante 17, und zwar in Richtung auf die schmale Längsseite 32 (Fig. 6) wirkt. Dies bedeutet, dass die Abtriebskraft F₂ eine Kraftkomponente F₃ besitzt, die in Richtung auf die schmale Längsseite 32 des Klemmabschnitts 18, im Ausführungsbeispiel etwa radial nach außen, wirkt. Dadurch gleitet der Mähfaden 9 bei einer Zugkraft am Mähfaden 9 in Richtung auf die schmale Längsseite 32 des Klemmabschnitts 18 ab und wird in Richtung auf die schmale Längsseite 32 des Klemmabschnitts 18 gezogen, so dass zusätzlich zu der an der Umlenkkante 17 wirkenden Reibkraft eine Klemmkraft in dem durch den Klemmabschnitt 18 gebildeten Klemmkeil auftritt und zusätzlich die Normalkraft F₁ zunimmt, wodurch die Auszugskraft vergrößert wird. Gleiches gilt für den Klemmabschnitt 19, in dem aufgrund der Schrägstellung der Umlenkkante 17 und der Biegesteifigkeit des Mähfadens 9 ebenfalls eine Kraftkomponente F₃ in Richtung auf die schmale Längsseite 34 (Fig. 6) wirkt. Der Winkel α beträgt vorteilhaft 10° bis 80°, insbesondere 20° bis 70° und besonders bevorzugt 30° bis 60°. Besonders bevorzugt ist die schmale Längsseite 32 in Richtung auf das nach außen ragende, freie Ende des Mähfadens 9 angeordnet. Im Bereich der Umlenkkontur 63 ist vorteilhaft eine durchgängige Anlage des Mähfadens 9 an der Kanalwandung während des Betriebs vorgesehen, um durch die dort auftretenden Reibkräfte die Auszugskraft des Mähfadens 9 aus der Befestigungseinrichtung 11 zu erhöhen.

Wie Fig. 7 zeigt, ist angrenzend zur Befestigungsöffnung 54 an der Unterseite 21 eine Zugangsöffnung 59 mit vergrößertem Durchmesser vorgesehen. Durch die Befestigungsöffnung 54 ragt vorteilhaft eine Antriebswelle, an der der Mähkopf 7 drehfest fixiert wird. Zur Fixierung kann ein Befestigungsmittel, wie beispielsweise eine Mutter, genutzt werden, das durch die Zugangsöffnung 59 auf der Antriebswelle aufgesetzt und an der Antriebswelle festgelegt wird.

Die Fig. 8 und 9 zeigen eine Ansicht auf das erste Gehäuseteil 23 von der dem zweiten Gehäuseteil 24 zugewandten Innenseite. Wie Fig. 8 zeigt, erstreckt sich eine Vielzahl von Versteifungsrippen 57 vom Stutzen 55 etwa radial nach außen. Die Fadenkanäle 14 und 15 sind beidseitig einer Versteifungsrippe 57 angeordnet, die sich bis zur Umfangswand 46 erstreckt. Wie Fig. 8 auch zeigt, besitzt das Gehäuseteil 24 Öffnungen 58, die zur Aufnahme der Niete 28 dienen.

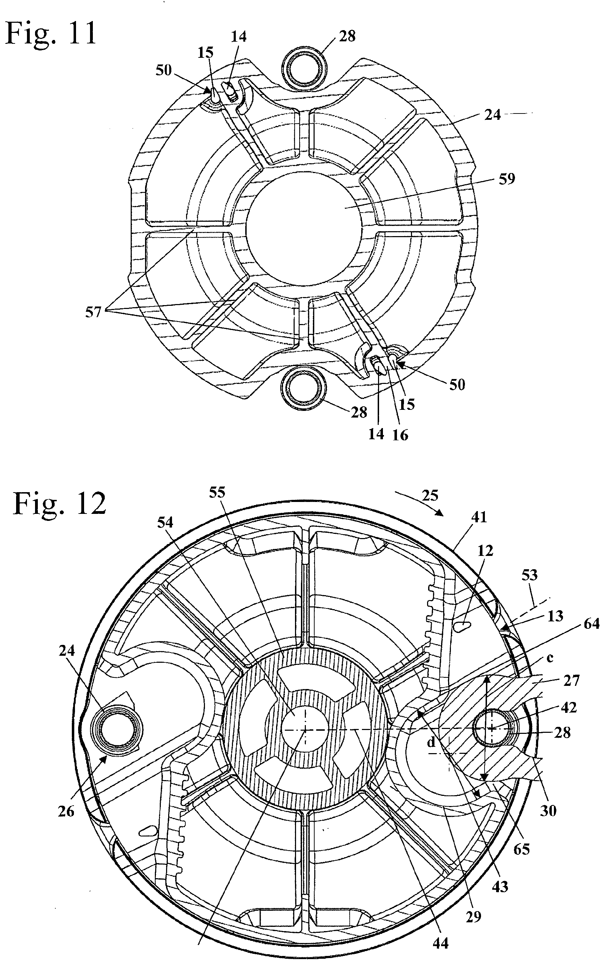

In der vergrößerten Darstellung in Fig. 9 sind die Rundungen 56 im Einzelnen erkennbar. Außerdem ist erkennbar, dass der Trennsteg 16 durch eine Versteifungsrippe 57 gebildet ist. Die Schnittdarstellung in Fig. 7 zeigt keinen Schnitt durch die Drehachse 8, sondern einen Schnitt geringfügig hierzu versetzt. Im Bereich der Trennrippe 16 ist die Versteifungsrippe 57 demnach nicht exakt radial zur Drehachse 8 ausgerichtet, sondern geringfügig zur radialen Richtung geneigt. Dies ist auch in Fig. 11 erkennbar.

Fig. 12 zeigt die Gestaltung der bogenförmigen Vertiefung 29 im Einzelnen. Die bogenförmige Vertiefung 29 weist einen kreisbogenförmigen Querschnitt mit einem Zentrum 43 auf, das die Mittelachse des Kreisbogens bildet. Die bogenförmige Vertiefung 29 besitzt einen Durchmesser d, der etwas größer als eine Breite c eines am Niet 28 eingehängten Messers 27 benachbart zur bogenförmigen Vertiefung 29 ist. Wie Fig. 12 auch zeigt, besitzt das Messer 27 eine Aufnahme 30, die vorteilhaft eine schlüssellochförmige Gestalt aufweist, so dass das Messer 27 über die Aufnahme 30 auf den Niet 28 ein Richtung einer Längsachse 42 des Niets 28 aufgesetzt und durch Verschieben des Messers 27, vorzugsweise in einer Richtung bezüglich der Längsachse 42 des Niets 28 radial nach außen, am Niet 28 festgelegt werden kann. Das Zentrum 43 ist bezogen auf die Drehrichtung 25 vorlaufend zu einer Verbindungsebene 44, die die Drehachse 8 mit der Längsachse 42 des Niets 28 verbindet, angeordnet. Um das Messer 27 von dem Niet 28 abzunehmen, muss das Messer 27 verschwenkt werden, aus der in Fig. 12 gezeigten radialen Ausrichtung entgegen der Drehrichtung 25, bis das Zentrum 43 der bogenförmigen Vertiefung 29 in Verlängerung der Längsrichtung des Messers 27 liegt. Dann muss das Messer 27 etwa radial nach innen verschoben werden, bis der Niet 28 in der Aufnahme 30 des Messers 27 zu liegen kommt, um dann das Messer 27 in Richtung der Längsachse 42 des Niets 28 vom Niet 28 abzunehmen. Die bogenförmige Vertiefung 29 endet an Begrenzungskonturen 64, 65. Die Begrenzungskonturen 64, 65 verhindern eine Bewegung des Messers 27 in Richtung der Längsrichtung des Messers 27, solange die Längsrichtung des Messers 27 nicht in Richtung auf das Zentrum 43 der bogenförmigen Vertiefung 29 ausgerichtet ist.

Es kann vorteilhaft sein, eine weitere Vertiefung vorzusehen, in die das Messer 27 bei einem Stoß auf das Messer 27 ausweichen kann, um Beschädigungen des Messers 27 im Betrieb zu vermeiden.

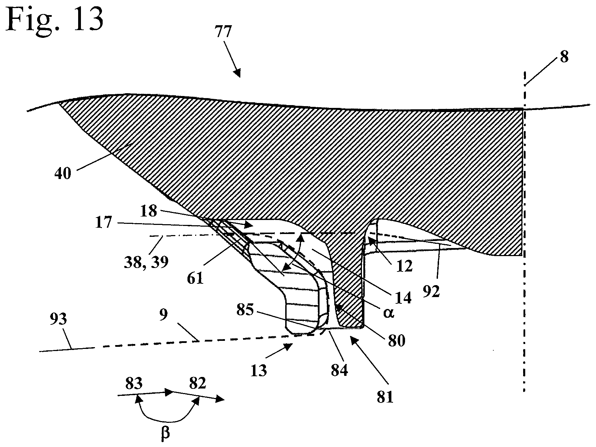

Im Ausführungsbeispiel nach den Figuren 1 bis 12 verlaufen die Längsrichtungen 38, 39 der Klemmabschnitte 18, 19 parallel zur Drehachse 8. Auch eine andere Ausrichtung der Längsrichtungen 38, 39, beispielsweise senkrecht zur Drehachse 87 in radialer Richtung zur Drehachse 8, kann jedoch vorteilhaft sein. Fig. 13 zeigt ein Ausführungsbeispiel eines Mähkopfes 77, der eine Befestigungseinrichtung 81 aufweist. Die Befestigungseinrichtung 81 besitzt eine Fadenführung 80, die sich von einer Eintrittsöffnung 13 in die Fadenführung 80 bis zu einer Austrittsöffnung 12 aus der Fadenführung 80 erstreckt. Der Aufbau der Befestigungseinrichtung 81 entspricht dem der Befestigungseinrichtung 11. Gleiche Bezugszeichen bezeichnen in allen Figuren einander entsprechende Elemente. Die Befestigungseinrichtung 81 ist gegenüber der Befestigungseinrichtung 11 um 90° gedreht am Mähkopf 77 angeordnet. Die Längsrichtungen 38 und 39 der Klemmabschnitte 18 und 19 verlaufen bei der Befestigungseinrichtung 81 in radialer Richtung zur Drehachse 8. Der erste Fadenkanal 14 erstreckt sich von der Öffnung 61 an der Umlenkkante 17 bis zu einer Öffnung 84 an der Unterseite 21 des Mähkopfes 77. Aus der Öffnung 84 tritt der in Fig. 13 mit gestrichelter Linie schematisch eingezeichnete Mähfaden 9 nach unten aus dem ersten Fadenkanal 14 aus. Am Gehäuse 40 ist an der radial außenliegenden Seite der Öffnung 84 eine Umlenckontur 85 ausgebildet, die ebenfalls einen Teil der Fadenführung 80 bildet und an der der Mähfaden 9 in eine etwa radial zur Drehachse 8 nach außen liegende Ausrichtung umgelenkt ist. Der Mähfaden 9 tritt an der Eintrittsöffnung 13 in einer Eintrittsrichtung 83 in die Fadenführung 80 ein und an der Austrittsöffnung 12 in einer Austrittsrichtung 13 aus der Fadenführung 80 aus. Die Eintrittsrichtung 83 und die Austrittsrichtung 82 sind Richtungsvektoren, die einen Winkel β einschließen, der größer als 0° ist. Im Ausführungsbeispiel ist der Winkel β deutlich größer als 90°. Der Winkel β ist nur geringfügig kleiner als 180°. Auch eine parallele Ausrichtung von Eintrittsrichtung 83 und Austrittsrichtung 82 kann jedoch vorteilhaft sein. Der Mähkopf 77 besitzt eine Eintrittsgerade 93, die in Eintrittsrichtung 83 durch die nach unten offene Eintrittsöffnung 13 verläuft und eine Austrittsgerade 92, die in Austrittsrichtung 82 durch die Austrittsöffnung 12 verläuft. Die Eintrittsgerade 93 und die Austrittsgerade 92 liegen in Umfangsrichtung versetzt zueinander und verlaufen dadurch windschief zueinander.

Die gezeigte Gestaltung der Befestigungseinrichtungen kann auch für anders aufgebaute Mähköpfe, insbesondere für Mähköpfe mit anderem, beispielsweise einteiligem Aufbau des Gehäuses 40 und/oder ohne Messeraufnahmen 26 und/oder ohne Aussparungen 47, vorteilhaft sein.

## Patentansprüche

1. Mähkopf für einen Freischneider, wobei der Mähkopf (7, 77) eine Drehachse (8) besitzt, um die der Mähkopf (7, 77) im Betrieb rotierend anzutreiben ist, wobei der Mähkopf (7, 77) ein Gehäuse (40) besitzt, das eine Umfangswand (41) aufweist, wobei der Mähkopf (7, 77) mindestens eine Befestigungseinrichtung (11, 81) für einen Mähfaden (9) besitzt, wobei die Befestigungseinrichtung (11, 81) eine Fadenführung (50, 80) besitzt, die mindestens einen Fadenkanal (14, 15) umfasst, wobei der Fadenkanal (14, 15) einen Klemmabschnitt (18, 19) besitzt, wobei der Klemmabschnitt (18, 19) eine breite Längsseite (31, 33) und eine schmale Längsseite (32, 34) besitzt, die sich in einer Längsrichtung (38, 39) des Klemmabschnitts (18, 19) erstrecken, und wobei sich die lichte Weite (a, b) des Klemmabschnitts (18, 19) von der breiten Längsseite (31, 33) zu der schmalen Längsseite (32, 34) verringert, wobei die Fadenführung (50, 80) einen an den Klemmabschnitt (18, 19) anschließenden Umlenkbereich (45) aufweist, der eine Umlenkkante (17) besitzt, wobei die Umlenkkante (17) so zur Längsrichtung (38, 39) des Klemmabschnitts (18, 19) geneigt ist, dass die Umlenkkante (17) bei einer Zugkraft (F) auf einen durch die Befestigungseinrichtung (11,81) geführten Mähfaden (9) eine Kraftkomponente (F₃) auf den Mähfaden (9) in Richtung auf die schmale Längsseite (32, 34) des Klemmabschnitts (18, 19) erzeugt, wobei die Fadenführung (50, 80) den ersten Fadenkanal (14) und einen zweiten Fadenkanal (15) umfasst,
**dadurch gekennzeichnet, dass** zwischen dem ersten Fadenkanal (14) und dem zweiten Fadenkanal (15) ein Trennsteg (16) ausgebildet ist, wobei am Trennsteg (16) eine Seitenwand (36) des ersten Fadenkanals (14) und eine Seitenwand (37) des zweiten Fadenkanals (15) ausgebildet ist, wobei die Stirnseite des Trennsteges (16) eine zwischen den Seitenwänden (36, 37) angeordnete, die Außenseite des Mähkopfes (7) bildende Fläche ist und die Umlenkkante (17) für den Mähfaden (9) bildet.

2. Mähkopf nach Anspruch 1,
**dadurch gekennzeichnet, dass** die Längsrichtung (38, 39) des Klemmabschnitts (18, 19) mit der Umlenkkante (17) in einer Schnittebene, die parallel zur Drehachse liegt und die Umlenkkante enthält, einen Winkel (a) von 10° bis 80° einschließt, wobei der Winkel (a) in Richtung zum Fadenkanal (18, 19) liegt und in Richtung auf die schmale Längsseite (32, 34) des Klemmabschnitts (18, 19) öffnet.

3. Mähkopf nach Anspruch 1 oder 2,
**dadurch gekennzeichnet, dass** die schmale Längsseite (32, 34) des Klemmabschnitts (18, 19) des mindestens einen Fadenkanals (14, 15) radial außen angeordnet ist und die breite Längsseite (31, 32) radial innen angeordnet ist.

4. Mähkopf nach einem der Ansprüche 1 bis 3,
**dadurch gekennzeichnet, dass** der Mähkopf (7, 77) eine Stirnseite besitzt, die den Mähkopf (7, 77) in Richtung der Drehachse (8) begrenzt, und dass im Fadenkanal (14) eine Umlenkkontur (35, 63) ausgebildet ist, die einen an der Befestigungseinrichtung (11, 81) fixierten Mähfaden (9) von der Umfangswand (41) zur Stirnseite umlenkt.

5. Mähkopf nach einem der Ansprüche 1 bis 4,
**dadurch gekennzeichnet, dass** der Fadenkanal (14) ein erster Fadenkanal (14) ist und dass ein zweiter Fadenkanal (15) vorgesehen ist, wobei die Umlenkkante (17) zwischen den Fadenkanälen (14, 15) angeordnet ist.

6. Mähkopf nach Anspruch 5,
**dadurch gekennzeichnet, dass** der zweite Fadenkanal (15) einen Klemmabschnitt (19) besitzt, dass die Längsrichtungen (38, 39) der Klemmabschnitte (18, 19) der Fadenkanäle (14, 15) etwa parallel zueinander verlaufen und dass die Fadenkanäle (14, 15) jeweils eine dem anderen Fadenkanal (14, 15) zugewandte Seitenwand (36, 37) besitzen, wobei die Seitenwände (36, 37) an einem gemeinsamen Trennsteg (16) ausgebildet sind, an dessen Stirnseite die Umlenkkante (17) ausgebildet ist.

7. Mähkopf nach Anspruch 6,
**dadurch gekennzeichnet, dass** die Seitenwände (36, 37) etwa parallel zueinander verlaufen.

8. Mähkopf nach einem der Ansprüche 1 bis 7,
**dadurch gekennzeichnet, dass** die Fadenführung (50, 80) an einer Eintrittsöffnung (13) beginnt, die in einer Eintrittsrichtung (53, 83) liegt, und dass die Fadenführung (50, 80) an einer Austrittsöffnung (12) endet, die in einer Austrittsrichtung (52, 82) liegt.

9. Mähkopf nach Anspruch 8,
**dadurch gekennzeichnet, dass** eine durch die Eintrittsöffnung (13) verlaufende, in Eintrittsrichtung (53, 83) liegende Eintrittsgerade (73, 93) zu einer durch die Austrittsöffnung (12) verlaufenden, in Austrittsrichtung (52, 82) liegenden Austrittsgeraden (72, 82) windschief liegt.

10. Mähkopf nach einem der Ansprüche 1 bis 9,
**dadurch gekennzeichnet, dass** der Mähkopf (7, 77) ein Gehäuse (40) umfasst, das aus mindestens zwei Gehäuseteilen (23, 24) gebildet ist, wobei die beiden Gehäuseteile (23, 24) die Fadenführung (50, 80) begrenzen und durch mindestens einen Niet (28) miteinander verbunden sind.

11. Mähkopf nach Anspruch 10,
**dadurch gekennzeichnet, dass** der mindestens eine Niet (28) eine Messeraufnahme (26) bildet, an der ein Messer (27) eingehängt werden kann.

12. Mähkopf nach Anspruch 11,
**dadurch gekennzeichnet, dass** der Mähkopf (7, 77) benachbart zu dem Niet (28) eine bogenförmige Vertiefung (29) in der Umfangswand (41) besitzt, wobei das Zentrum (43) der Vertiefung (29) radial zwischen dem Niet (28) und der Drehachse (8) liegt und vorlaufend zu einer Verbindungsebene (44), die die Drehachse (8) und eine Längsachse (42) des Niets (28) enthält, angeordnet ist, wobei der Durchmesser (d) der bogenförmigen Vertiefung (29) mindestens der Breite (c) des Messers (27) entspricht.

13. Mähkopf nach einem der Ansprüche 1 bis 12,
**dadurch gekennzeichnet, dass** der Mähkopf (7, 77) mindestens einen Mähfaden (9) besitzt, wobei der Mähfaden (9) mit der mindestens einen Befestigungseinrichtung (11, 81) an dem Mähkopf (7, 77) gehalten ist und über die Umlenckante (17) geführt ist.

## Claims

1. Mower head for a string mower, wherein the mower head (7, 77) has an axis of rotation (8), about which the mower head (7, 77) is driven to rotate in operation, wherein the mower head (7, 77) has a housing (40) with a circumferential wall (41), wherein the mower head (7, 77) has at least one fastening device (11, 81) for a mowing string (9), wherein the fastening device (11, 81) has a string guide (50, 80) comprising at least one string channel (14, 15), wherein the string channel (14, 15) has a clamping section (18, 19), wherein the clamping section (18, 19) has a wide longitudinal side (31, 33) and a narrow longitudinal side (32, 43) extending in a longitudinal direction (38, 39) of the clamping section (18, 19), and wherein the inside width (a, b) of the clamping section (18, 19) decreases from the wide longitudinal side (31, 33) to the narrow longitudinal side (32, 34), wherein the string guide (50, 80) has a deflecting region (45), which adjoins the clamping section (18, 19) and has a deflecting edge (17), wherein the deflecting edge (17) is inclined relative to the longitudinal direction (38, 39) of the clamping section (18, 19) in such a way that the deflecting edge (17) generates, if a tensile force (F) acts on a mowing string (9) guided through the fastening device (11, 81), a force component (F₃) on the mowing string (9) in the direction towards the narrow longitudinal side (32, 43) of the clamping section (18, 19), wherein the string guide (50, 80) comprises the first string channel (14) and a second string channel (15),
**characterised in that** a separating web (16) is formed between the first string channel (14) and the second string channel (15), wherein a side wall (36) of the first string channel (14) and a side wall (37) of the second string channel (15) are formed on the separating web (16), wherein the end face of the separating web (16) is a surface which is located between the side walls (36, 37), forms the outside of the mower head (7) and forms the deflecting edge (17) for the mowing string (9).

2. Mower head according to claim 1,
**characterised in that** the longitudinal direction (38, 39) of the clamping section (18, 19) encloses with the deflecting edge (17) in a sectional plane which is parallel to the axis of rotation and contains the deflecting edge an angle (α) of 10° to 80°, wherein the angle (α) lies in the direction towards the string channel (18, 19) and opens up in the direction towards the narrow longitudinal side (32, 34) of the clamping section (18, 19).

3. Mower head according to claim 1 or 2,
**characterised in that** the narrow longitudinal side (32, 34) of the clamping section (18, 19) of the at least one string channel (14, 15) is located radially outside and the wide longitudinal side (31, 33) is located radially inside.

4. Mower head according to any of claims 1 to 3,
**characterised in that** the mower head (7, 77) has an end face which bounds the mower head (7, 77) in the direction of the axis of rotation (8), and **in that** a deflecting contour (35, 63), which deflects a mowing string (9) fixed to the fastening device (11, 81) from the circumferential wall (41) to the end face, is formed in the string channel (14), is formed in the string channel (14).

5. Mower head according to any of claims 1 to 4,
**characterised in that** string channel (14) is a first string channel (14), and **in that** a second string channel (15) is provided, the deflecting edge (17) being located between the string channels (14, 15).

6. Mower head according to claim 5,
**characterised in that** the second string channel (15) has a clamping section (19), **in that** the longitudinal directions (38, 39) of the clamping sections (18, 19) of the string channels (14, 15) extend approximately parallel to each other, and **in that** each of the string channels (14, 15) has a side wall (36, 37) facing the other the string channels (14, 15), wherein the side walls (36, 37) are formed on a common separating web (16), at the end face of which the deflecting edge (17) is formed.

7. Mower head according to claim 6,
**characterised in that** the side walls (36, 37) extend approximately parallel to each other.

8. Mower head according to any of claims 1 to 7,
**characterised in that** the string guide (50, 80) starts at an entry opening (13) lying in an entry direction (53, 83) and **in that** the string guide (50, 80) ends at an exit opening (12) lying in an exit direction (52, 82).

9. Mower head according to claim 8,
**characterised in that** an entry straight (73, 93) extending through the entry opening (13) and lying in the entry direction (53, 83) is skew relative to an exit straight (72, 82) extending through the exit opening (12) and lying in the exit direction (52, 82).

10. Mower head according to any of claims 1 to 9,
**characterised in that** the mower head (7, 77) comprises a housing (40) formed of at least two housing parts (23, 24), wherein the two housing parts (23, 24) bound the string guide (50, 80) and are connected to each other by at least one rivet (28).

11. Mower head according to claim 10,
**characterised in that** the at least one rivet (28) forms a blade receptacle (26), in which a blade (27) can be mounted.

12. Mower head according to claim 11,
**characterised in that** the mower head (7, 77) has adjacent to the rivet (28) a curved recess (29) in the circumferential wall (41), wherein the centre (43) of the recess (29) lies radially between the rivet (28) and the axis of rotation (8) and is located upstream of a connecting plane (44) containing the axis of rotation (8) and a longitudinal axis (42) of the rivet (28), wherein the diameter (d) of the curved recess (29) corresponds at least to the width (c) of the blade (27).

13. Mower head according to any of claims 1 to 12,
**characterised in that** the mower head (7, 77) has at least one mowing string (9), wherein the mowing string (9) is held on the mower head (7, 77) by the at least one fastening device (11,81) and guided over the deflecting edge (17).

## Revendications

1. Tête faucheuse pour une débroussailleuse, dans laquelle la tête faucheuse (7, 77) a un axe de rotation (8) sur lequel elle est entraînée en rotation, en fonctionnement, dans laquelle la tête faucheuse (7, 77) a un boîtier (40) qui présente une paroi circonférentielle (41), dans laquelle la tête faucheuse (7, 77) a au moins un dispositif de fixation (11,81) pour un fil faucheur (9), dans laquelle le dispositif de fixation (11, 81) a un guide-fil (50, 80) qui comprend au moins un conduit de fil (14, 15), dans laquelle le conduit de fil (14, 15) a une section de serrage (18, 19), dans laquelle la section de serrage (18, 19) a un côté longitudinal large (31, 33) et un côté longitudinal étroit (32, 34) qui s'étendent dans une direction longitudinale (38, 39) de la section de serrage (18, 19), et dans laquelle la largeur intérieure (a, b) de la section de serrage (18, 19) diminue du côté longitudinal large (31, 33) jusqu'au côté longitudinal étroit (32, 34), dans laquelle le guide-fil (50, 80) présente une zone de déviation (45) qui fait suite à la section de serrage (18, 19) et qui a un bord de déviation (17), dans laquelle le bord de déviation (17) est incliné par rapport à la direction longitudinale (38, 39) de la section de serrage (18, 19) de manière à produire, en présence d'une force de traction (F) sur un fil faucheur (9) guidé par le dispositif de fixation (11, 81), une composante de force (F₃) sur le fil faucheur (9) en direction du côté longitudinal étroit (32, 34) de la section de serrage (18, 19), dans laquelle le guide-fil (50, 80) comprend le premier conduit de fil (14) et un deuxième conduit de fil (15),
**caractérisée en ce qu'**une bande de séparation (16) est formée entre le premier conduit de fil (14) et le deuxième conduit de fil (15), dans laquelle sur la bande de séparation (16) sont formées une paroi latérale (36) du premier conduit de fil (14) et une paroi latérale (37) du deuxième conduit de fil (15), dans laquelle le côté frontal de la bande de séparation (16) est une surface disposée entre les parois latérales (36, 37) et formant le côté extérieur de la tête faucheuse (7), et forme le bord de déviation (17) pour le fil faucheur (9).

2. Tête faucheuse selon la revendication 1,
**caractérisée en ce que** la direction longitudinale (38, 39) de la section de serrage (18, 19) forme avec le bord de déviation (17), dans un plan de coupe qui est parallèle à l'axe de rotation et contient le bord de déviation, un angle (α) de 10° à 80°, dans laquelle l'angle (α) est situé en direction du conduit de fil (18, 19) et s'ouvre en direction du côté longitudinal étroit (32, 34) de la section de serrage (18, 19).

3. Tête faucheuse selon la revendication 1 ou 2,
**caractérisée en ce que** le côté longitudinal étroit (32, 34) de la section de serrage (18, 19) du au moins un conduit de fil (14, 15) est disposé radialement à l'extérieur, et le côté longitudinal large (31, 32) est disposé radialement à l'intérieur.

4. Tête faucheuse selon l'une des revendications 1 à 3,
**caractérisée en ce que** la tête faucheuse a un côté frontal qui la limite dans la direction de l'axe de rotation (8), et **en ce que** dans le conduit de fil (14) est formé un contour de déviation (35, 63) qui dévie un fil faucheur (9), fixé au dispositif de fixation (11, 81), de la paroi circonférentielle (41) vers le côté frontal.

5. Tête faucheuse selon l'une des revendications 1 à 4,
**caractérisée en ce que** le conduit de fil (14) est un premier conduit de fil (14), et **en ce qu'**un deuxième conduit de fil (15) est prévu, dans laquelle le bord de déviation (17) est disposé entre les conduits de fil (14, 15).

6. Tête faucheuse selon la revendication 5,
**caractérisée en ce que** le deuxième conduit de fil (15) a une section de serrage (19), **en ce que** les directions longitudinales (38, 39) des sections de serrage (18, 19) des conduits de fil (14, 15) sont à peu près parallèles, et **en ce que** les conduits de fil (14, 15) ont chacun une paroi latérale (36, 37) tournée vers l'autre conduit de fil (14, 15), dans laquelle les parois latérales (36, 37) sont formées sur une bande de séparation commune (16) sur le côté frontal de laquelle est formé le bord de déviation (17).

7. Tête faucheuse selon la revendication 6,
**caractérisée en ce que** les parois latérales (36, 37) sont à peu près parallèles.

8. Tête faucheuse selon l'une des revendications 1 à 7,
**caractérisée en ce que** le guide-fil (50, 80) commence à une ouverture d'entrée (13) qui est située dans une direction d'entrée (53, 83), et **en ce que** le guide-fil (50), 80) se termine à une ouverture de sortie (12) qui est située dans une direction de sortie (52, 82).

9. Tête faucheuse selon la revendication 8,
**caractérisée en ce qu'**une droite d'entrée (73, 93) traversant l'ouverture d'entrée (13) et située dans la direction d'entrée (53, 83) est inclinée par rapport à une droite de sortie (72, 82) traversant l'ouverture de sortie (12) et située dans la direction de sortie (52, 82).

10. Tête faucheuse selon l'une des revendications 1 à 9,
**caractérisée en ce que** la tête faucheuse (7, 77) comprend un boîtier (40) qui est formé d'au moins deux parties de boîtier (23, 24), dans laquelle les deux parties de boîtier (23, 24) limitent le guide-fil (50, 80) et sont reliées par au moins un rivet (28).

11. Tête faucheuse selon la revendication 10,
**caractérisée en ce que** le au moins un rivet (28) forme un logement de lame (26) dans lequel une lame (27) peut être accrochée.

12. Tête faucheuse selon la revendication 11,
**caractérisée en ce que** la tête faucheuse (7, 77), près du rivet (28), a un creux courbe (29) dans la paroi circonférentielle (41), dans laquelle le centre (43) du creux (29) est situé radialement entre le rivet (28) et l'axe de rotation (8) et est disposé en avant d'un plan de liaison (44) qui contient l'axe de rotation (8) et un axe longitudinal (42) du rivet (28), dans laquelle le diamètre (d) du creux courbe (29) correspond au moins à la largeur (c) de la lame (27).

13. Tête faucheuse selon l'une des revendications 1 à 12,
**caractérisée en ce que** la tête faucheuse (7, 77) a au moins un fil faucheur (9), dans laquelle le fil faucheur (9) est retenu sur la tête faucheuse (7, 77) avec l'au moins un dispositif de fixation (11, 81), et passe contre le bord de déviation (17).
